# EUROPÄISCHE PATENTSCHRIFT

(11) **EP 3 161 285 B1**
(45) Veröffentlichungstag und Bekanntmachung des Hinweises auf die Patenterteilung: **31.07.2019**
(21) Anmeldenummer: 15726180.1
(22) Anmeldetag: 03.06.2015
(51) Int. Cl.: F01N 3/20, F01N 3/029, F01N 9/00, F01N 3/30

(54) **VORRICHTUNG ZUR ERZEUGUNG VON AMMONIAK ZUR ABGASNACHBEHANDLUNG**
APPARATUS FOR PRODUCING AMMONIA FOR EXHAUST GAS AFTERTREATMENT
DISPOSITIF DE PRODUCTION D'AMMONIAC POUR LE POST-TRAITEMENT DE GAZ D'ÉCHAPPEMENT

(30) Priorität: 25.06.2014 DE 102014108877
(43) Veröffentlichungstag der Anmeldung: 03.05.2017
(73) Patentinhaber: Baumot AG, 8152 Glattpark (CH)
(72) Erfinder: MIDDELMANN, Henning, 58313 Herdecke (DE)
(74) Vertreter: Rössler, Matthias
(86) Internationale Anmeldenummer: PCT/EP2015/062397
(87) Internationale Veröffentlichungsnummer: WO 2015/197330

(56) Entgegenhaltungen:
- WO-A1-2013/160530
- DE-A1-102005 063 081
- DE-A1-102009 053 950
- DE-A1-102011 005 654
- DE-U1-202013 100 716

## Beschreibung

Die Erfindung betrifft eine Vorrichtung und ein Verfahren zur Erzeugung von Ammoniak aus einer Ammoniak-Vorläuferlösung. Eine derartige Vorrichtung kann beispielsweise dazu verwendet werden, Ammoniak zu erzeugen, der für die Abgasreinigung in einer Abgasbehandlungsvorrichtung genutzt wird. Abgasbehandlungsvorrichtungen, in denen zur Abgasreinigung Ammoniak genutzt wird, werden beispielsweise häufig zur Reinigung der Abgase von Diesel-Verbrennungskraftmaschinen in Kraftfahrzeugen verwendet. Mit Hilfe des Ammoniaks werden Stickstoffoxidverbindungen im Abgas der Verbrennungskraftmaschine reduziert. Als Ammoniak-Vorläuferlösung wird typischerweise Harnstoff-Wasser-Lösung verwendet. Eine solche Ammoniak-Vorläuferlösung hat im Gegensatz zu Ammoniak den Vorteil, dass sie unproblematisch in einem Tank gelagert werden kann. Besonders häufig wird eine Harnstoff-Wasser-Lösung mit einem Harnstoffgehalt von 32,5 % verwendet, die unter dem Handelsnamen AdBlue® erhältlich ist.

Die Umsetzung von Ammoniak-Vorläuferlösung in Ammoniak erfordert regelmäßig besondere technische Maßnahmen. Ammoniak entsteht aus der Ammoniak-Vorläuferlösung beispielsweise bei bestimmten Temperaturen. Besonders gut findet die Umsetzung in einem Temperaturbereich zwischen 150 °C und 550 °C statt.

Der Temperaturbereich zur Umsetzung von Ammoniak-Vorläuferlösung in Ammoniak kann durch die Anwesenheit von Katalysatoren erweitert und insbesondere abgesenkt werden, so dass die Umsetzung sogar in einem Temperaturbereich zwischen 140 °C und 250 °C stattfinden kann. Die thermische Umsetzung von Ammoniak-Vorläuferlösung in Ammoniak wird üblicherweise als Thermolyse oder als thermolytische Umsetzung bezeichnet. Wenn die Umsetzung zusätzlich durch einen Katalysator unterstützt wird, spricht man von der Hydrolyse oder hydrolytischer Umsetzung.

In jedem Fall muss die Ammoniak-Vorläuferlösung erwärmt werden, um zu Ammoniak umgesetzt zu werden. Dafür wird Wärmeenergie benötigt. Üblicherweise wird die Ammoniak-Vorläuferlösung daher in die Abgase einer Verbrennungskraftmaschine direkt zugegeben. Dann erfolgt die Erwärmung durch die Abgase. Hierbei besteht allerdings das Problem, dass insbesondere bei Diesel-Verbrennungskraftmaschinen die Abgase häufig relativ niedrige Temperaturen aufweisen und daher (zumindest in vielen Lastzuständen des Dieselmotors) nicht ausreichend thermische Energie bereitstellen können, um Ammoniak-Vorläuferlösung effektiv in Ammoniak umzusetzen. Diesem Problem wurde in der Vergangenheit regelmäßig mit Hilfe von geeigneten Maßnahmen zur Temperaturerhöhung in einer Abgasbehandlungsvorrichtung begegnet. Besonders häufig erfolgt das Beheizen der Abgase mit Hilfe einer elektrischen Heizung. Eine weitere bekannte Methode zur Temperaturerhöhung der Abgase ist das bewusste Verschieben des Betriebspunktes der Verbrennungskraftmaschine, so dass die Verbrennungskraftmaschine Abgase mit höheren Temperaturen erzeugt. Hierbei ist es allerdings problematisch, dass sich insbesondere dann, wenn Ammoniak-Vorläuferlösung nicht vollständig zu Ammoniak umgesetzt wird, Ablagerungen der Ammoniak-Vorläuferlösung in der Abgasbehandlungsvorrichtung bilden können. Solche Ablagerungen können die Abgasreinigung (dauerhaft) negativ beeinträchtigen oder die Abgasbehandlungsvorrichtung sogar beschädigen. Darüber hinaus kann es passieren, dass die Abgastemperatur zu niedrig ist, um durch die beschriebenen bekannten Maßnahmen zur Temperaturerhöhung die Abgastemperatur für die Umsetzung von Ammoniak-Vorläuferlösung in Ammoniak ausreichend zu erhöhen. Dies gilt insbesondere für Kaltstartphasen einer Verbrennungskraftmaschine, weil die Abgase der Verbrennungskraftmaschine in Kaltstartphasen von der thermischen Masse der Verbrennungskraftmaschine und der Abgasbehandlungsvorrichtung stark abgekühlt werden.

Ein weiteres Problem bei Vorrichtungen zur Bereitstellung von Ammoniak ist auch, dass derartige Vorrichtungen so weit aufgewärmt sein können, dass die Temperatur für die Umsetzungsreaktion von Ammoniak-Vorläuferlösung in Ammoniak zu hoch ist. Weiter oben wurde bereits eine kritische obere Grenze für die Temperatur von 450 °C bis 550 °C benannt. Bei höheren Temperaturen zerfällt der erzeugte Ammoniak gegebenenfalls direkt wieder oder wird in Stickstoffoxid umgewandelt. Es ist daher regelmäßig nicht nur erforderlich, dass die untere Grenztemperatur in einer Vorrichtung zur Erzeugung von Ammoniak erreicht wird, sondern dass auch eine obere Grenztemperatur nicht überschritten wird. Insbesondere bei hohen Abgastemperaturen in Folge lange andauernder Volllastphasen einer Verbrennungskraftmaschine können Temperaturen erreicht werden, in denen keine zuverlässige Bereitstellung von Ammoniak mehr möglich ist. Gerade in solchen Phasen ist es allerdings besonders wichtig, dass Ammoniak zuverlässig bereitgestellt wird, weil Verbrennungskraftmaschinen in solchen Phasen einen hohen Ausstoß an Stickstoffoxiden haben.

Eine Reduktionsmitteldosiereinrichtung mit einem Hydrolysekatalysator, bei der Abgas mit Ladeluft vermischt wird, ist beispielsweise in der DE 10 2011 005 654 A1 beschrieben. In der DE 10 2005 063081 A1 ist zudem eine vor einem SCR-Katalysator zu montierende Funktionseinheit beschrieben.

Hiervon ausgehend ist es Aufgabe der vorliegenden Erfindung, eine verbesserte Vorrichtung zur Erzeugung von Ammoniak zu beschreiben, die insbesondere auch bei hohen Abgastemperaturen eine zuverlässige Bereitstellung von Ammoniak ermöglicht. Des Weiteren soll ein besonders vorteilhaftes Verfahren zum Betrieb einer derartigen Vorrichtung vorgeschlagen werden.

Diese Aufgaben werden gelöst mit einer Vorrichtung gemäß den Merkmalen des Anspruchs 1 und mit einem Verfahren gemäß den Merkmalen des Anspruchs 10. Weitere vorteilhafte Ausgestaltungen der Erfindung sind in den abhängigen Ansprüchen angegeben. Die in den Ansprüchen einzeln angeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft eine Vorrichtung zur Erzeugung von Ammoniak aus einer Ammoniak-Vorläuferlösung, aufweisend einen Reaktionsraum mit einem Einströmanschluss, durch welchen ein Gasstrom in den Reaktionsraum einströmen kann, und mit einem Ausströmanschluss, durch welchen ein ammoniakhaltiger Gasstrom den Reaktionsraum verlassen kann. Weiter ist eine Zugabevorrichtung vorgesehen, mit welcher dem Reaktionsraum eine Ammoniak-Vorläuferlösung zugegeben werden kann. Die Einströmöffnung ist mit einer ersten Verbindungsleitung verbunden, durch die Luft aus einer Ansaugleitung einer Verbrennungskraftmaschine in den Reaktionsraum einströmen kann, und darüber hinaus mit einer zweiten Verbindungsleitung verbunden, durch die eine Abgasströmung in den Reaktionsraum einströmen kann. Durch die zweite Verbindungsleitung kann Abgas vor dem Turbolader aus einer Abgasleitung der Verbrennungskraftmaschine in den Reaktionsraum einströmen. In dem Reaktionsraum ist eine elektrische Heizung angeordnet. Zudem mündet der Ausströmanschluss über eine Zugabeleitung hinter dem Turbolader aber vor einem Partikelfilter in die Abgasleitung.

Die Vorrichtung ist insbesondere als ein Bauteil konzipiert, welches extern bzw. benachbart einer Abgasleitung mit dem Hauptabgasstrom einer Verbrennungskraftmaschine positioniert ist. Die Vorrichtung ist typischerweise an einen Leitungsabzweig angeschlossen, der von einer Abgasleitung einer Abgasbehandlungsvorrichtung einer Verbrennungskraftmaschine abzweigt. Dieser Leitungsabzweig mündet dann in den Einströmanschluss der Vorrichtung ein. Vorzugsweise zweigt der Leitungsabzweig in Abgasströmungsrichtung vor einem in der Abgasleitung integrierten Abgasturbolader von der Abgasbehandlungsvorrichtung ab. An dem Ausströmanschluss der Vorrichtung ist typischerweise eine Zugabeleitung angeschlossen, über die der von der Vorrichtung erzeugte ammoniakhaltige Gasstrom der Abgasbehandlungsvorrichtung zugegeben wird. Die Zugabeleitung mündet vorzugsweise in Abgasströmungsrichtung hinter dem Turbolader in die Abgasbehandlungsvorrichtung der Verbrennungskraftmaschine ein. Besonders bevorzugt ist die Vorrichtung damit in einem Abgas-Bypass integriert, der den Turbolader überbrückt. Dies hat den Vorteil, dass zwischen dem Einströmanschluss und dem Ausströmanschluss ein Druckunterschied anliegt, welcher dafür sorgt, dass der in den Einströmanschluss eingeleitete Abgas mit einem Druckgefälle durch die Vorrichtung hindurch gedrückt wird.

Mit dem Reaktionsraum ist (mindestens) ein Hohlraum innerhalb der Vorrichtung gemeint, in welchem die Umsetzungsreaktion von Ammoniak-Vorläuferlösung in Ammoniak erfolgt. Der Reaktionsraum kann eine Komponente oder verschiedene funktionale Komponenten beinhalten, welche die Umsetzungsreaktion fördern. Dies sind beispielsweise (a) spezielle Katalysatoren, (b) Strukturen, die die Abgasströmung und die Bewegung des Ammoniaks und der Ammoniak-Vorläuferlösung in dem Reaktionsraum beeinflussen und/oder (c) Sensoren, usw.

Die Zugabevorrichtung umfasst vorzugsweise mindestens eine Düse, mit welcher die Ammoniak-Vorläuferlösung dem Reaktionsraum zugegeben werden kann. Vorzugsweise umfasst die Zugabevorrichtung darüber hinaus mindestens ein Ventil, mit welchem die Zugabe von Ammoniak-Vorläuferlösung gesteuert werden kann. Dies kann beispielsweise durch eine Anpassung der Öffnungszeit des Ventils geschehen. Dabei ist die Dauer der Öffnungszeit proportional zur zugeführten Menge Ammoniak-Vorläuferlösung. Die zugeführte Menge an Ammoniak-Vorläuferlösung kann auch über die Anzahl der Öffnungsvorgänge des Ventils gesteuert werden. Bevorzugt wird das Ventil mit einer festgelegten Öffnungszeit betrieben, und wenn eine bestimmte Menge an Ammoniak-Vorläuferlösung zugeführt werden soll, wird eine entsprechende (zur Menge proportionale) Anzahl an Öffnungsvorgängen durchgeführt.

An den Einströmanschluss der Vorrichtung ist hier sowohl eine erste Verbindungsleitung zur Zufuhr von Luft aus einer Ansaugleitung als auch eine zweite Verbindungsleitung zur Zufuhr von Abgas aus einer Abgasleitung anschließbar. Der in den Reaktionsraum der Vorrichtung einströmende Gasstrom besteht somit wahlweise aus Luft und/oder aus Abgas. Dies ermöglicht es, die Temperaturen des einströmenden Gasstroms besonders genau zu regulieren. Wenn die Temperatur des zur Verfügung stehenden Abgases zu hoch ist, so dass keine Umsetzung der Ammoniak-Vorläuferlösung in Ammoniak erfolgen kann, kann anstatt des Abgases aus einer Abgasleitung dem Reaktionsraum auch Luft aus einer Ansaugleitung der Verbrennungskraftmaschine zugeführt werden.

Die Zugabevorrichtung hat vorzugsweise zwei Anschlüsse, wobei an einem ersten Anschluss eine erste Verbindungsleitung für Luft und an einem zweiten Anschluss eine zweite Verbindungsleitung für Abgas angeschlossen ist. Es ist auch möglich, dass die Zugabevorrichtung lediglich einen Anschluss aufweist, an welchem beide Verbindungsleitungen (wahlweise verschließbar) angeschlossen sind. In einer weiteren Ausführungsvariante ist an einen Anschluss der Vorrichtung eine gemeinsame Verbindungsleitung angeordnet und die erste Verbindungsleitung für Luft und die zweite Verbindungsleitung für Abgas werden schon vor dem Anschluss miteinander vereinigt.

Besonders vorteilhaft ist die Vorrichtung, wenn zwischen der ersten Verbindungsleitung und der zweiten Verbindungsleitung ein Ventil angeordnet ist, mit dem dem Reaktionsraum wahlweise Abgas oder Luft zugeführt werden kann.

Dieses Ventil ist dabei vorzugsweise Bestandteil der Zugabevorrichtung. Mit dem Ventil kann zwischen der Zugabe von Luft und der Zugabe von Abgas umgeschaltet werden. Das Ventil ist vorzugsweise von einem Steuergerät steuerbar. Innerhalb der Vorrichtung befindet sich vorzugsweise ein Sensor, mit welchem die Temperatur der Vorrichtung überwacht werden kann. In Abhängigkeit der von dem Sensor erfassten Temperatur kann dann das Ventil gesteuert werden, um der Vorrichtung wahlweise Luft oder Abgas zuzuführen.

Weiterhin ist die Vorrichtung vorteilhaft, wenn mit dem Ventil ein Gemisch aus Luft und Abgas erzeugt werden kann, das dem Reaktionsraum zugeführt werden kann.

Das Ventil ist dann vorzugsweise in Form eines stufenlos verstellbaren Ventils ausgebildet, mit welchem wahlweise eine Strömung (entweder die Luftströmung oder die Abgasströmung, die an dem Einströmanschluss als Gasstrom in den Reaktionsraum eintritt) gedrosselt wird. Durch ein derartiges Ventil kann das Mischverhältnis zwischen Luft und Abgas in dem Gasstrom genau (und stufenlos) eingestellt werden. Hierdurch wird insbesondere eine stufenlose Anpassung der Temperatur des in den Reaktionsraum eintretenden Gasstroms möglich. Besonders bevorzugt ist ein solches stufenlos verstellbares Ventil mit Hilfe eines Steuergeräts und eines Sensors in der Vorrichtung in Abhängigkeit von der Temperatur in der Vorrichtung steuerbar.

In dem Reaktionsraum ist eine elektrische Heizung angeordnet.

Mit einer elektrischen Heizung kann die Temperatur der Vorrichtung (kurzfristig und über eine vorgebbare Heizperiode) erhöht werden, wenn weder das zur Verfügung stehende Abgas noch die zur Verfügung stehende Luft eine ausreichende Temperatur haben, um die Umsetzung von Ammoniak-Vorläuferlösung zu Ammoniak in der Vorrichtung zu ermöglichen. Dies ist insbesondere während einer Kaltstartphase einer Verbrennungskraftmaschine der Fall, weil dann die Abgasströmung noch keine ausreichende Temperatur für die Umsetzung von Ammoniak-Vorläuferlösung zu Ammoniak hat.

Im Zusammenhang mit einer Heizung ist ein besonderer Vorteil der Vorrichtung anzugeben, der sich insbesondere aus der Tatsache ergibt, dass die Vorrichtung durch den Einströmanschluss anstatt mit Abgas auch mit Luft beaufschlagt werden kann. Durch den Betrieb einer elektrischen Heizung in der Vorrichtung kann in der Vorrichtung Ozon erzeugt werden, wenn der Einströmanschluss der Vorrichtung mit Luft beaufschlagt wird. Ozon kann in einer Abgasbehandlungsvorrichtung beispielsweise genutzt werden, um Kohlenwasserstoffablagerungen (beispielsweise Ruß) in der Abgasbehandlungsvorrichtung aufzulösen. Dies ist insbesondere zur Reinigung eines Partikelfilters in der Abgasbehandlungsvorrichtung sehr nützlich. Die Vorrichtung kann somit als eine kombinierte Vorrichtung zur Erzeugung von Ammoniak und Ozon ausgeführt sein. Für die Erzeugung von Ozon wird die elektrische Heizung aktiviert und der Vorrichtung wird ein Luftstrom als Gasstrom zugeführt. Für die Erzeugung von Ammoniak wird der Vorrichtung Ammoniak-Vorläuferlösung zugeführt und gleichzeitig wird die Temperatur der Vorrichtung über eine Regulierung des Gasstroms und/oder die elektrische Heizung in einem für die Erzeugung von Ammoniak geeigneten Temperaturbereich gehalten. Zur Erzeugung von Ozon wird die Heizung üblicherweise mit maximal möglicher Leistung betrieben. Vorzugsweise wird der Luftstrom darüber hinaus so eingestellt, dass eine ausreichende Verweilzeit der Luft in der Vorrichtung auftritt, so dass Ozon gebildet wird. Dies kann beispielsweise durch eine gezielte Drosselung des Luftstroms erfolgen. Beispielsweise kann ein Drosselventil in der ersten Verbindungsleitung angeordnet sein, mit dem die Luftzufuhr gedrosselt werden kann, um die Verweilzeit der Luft in der Vorrichtung zu erhöhen.

Besonders vorteilhaft ist es, wenn die elektrische Heizung zugleich eine Auftreffstruktur innerhalb der Vorrichtung bildet, auf welche die Ammoniakvorläuferlösung auftrifft, wenn diese mit der Zugabevorrichtung zugegeben wurde. Die erhöhte Temperatur innerhalb der Vorrichtung wird insbesondere im Bereich der Auftreffstruktur benötigt, weil dort eine Abkühlung durch die auftreffende Ammoniak-Vorläuferlösung stattfindet. Darüber hinaus ist gerade auf der Auftreffstruktur eine erhöhte Temperatur erforderlich, um die Umsetzungsreaktion der Ammoniak-Vorläuferlösung zu bewirken.

Besonders vorteilhaft ist die Vorrichtung, wenn die elektrische Heizung ein elektrisch beheizbarer Wabenkörper ist.

Ein elektrisch beheizbarer Wabenkörper eignet sich insbesondere, um mit Hilfe einer elektrischen Heizung eine Auftreffstruktur zu bilden, die gleichzeitig für den Abgasstrom durchströmbar ist. Ein elektrischer Wabenkörper kann beispielsweise eine aus metallischen Folien gebildete Heizspirale sein, die einen Querschnitt der Vorrichtung bzw. einen Querschnitt des Reaktionsraums der Vorrichtung überspannt.

Darüber hinaus ist die Vorrichtung vorteilhaft, wenn der Einströmanschluss tangential an dem Reaktionsraum angeordnet ist.

Durch eine tangentiale Anordnung des Einströmanschlusses kann gewährleistet werden, dass das in den Einströmanschluss einströmende Gas innerhalb der Vorrichtung eine Wirbelströmung erzeugt. Diese Wirbelströmung hat einerseits den Vorteil, dass eine besonders gute Durchmischung von der Ammoniak-Vorläuferlösung und von dem Gasstrom erfolgt. Darüber hinaus zentriert die Wirbelströmung die Ammoniak-Vorläuferlösung innerhalb der Vorrichtung und sorgt dafür, dass die Ammoniak-Vorläuferlösung nicht oder nur in geringem Maße mit einer Außenwand der Vorrichtung in Berührung kommt. So kann die Bildung von Ablagerungen der Ammoniak-Vorläuferlösung an der Außenwand der Vorrichtung verhindert werden können.

Weiterhin ist die Vorrichtung vorteilhaft, wenn der Reaktionsraum durch ein zylindrisches Umlenkelement in einen zylindrischen Spalt und eine zentrale Kammer unterteilt ist, wobei der zylindrische Spalt und die zentrale Kammer über einen Umlenkbereich miteinander verbunden sind, wobei der Einströmanschluss an dem zylindrischen Spalt angeordnet ist, der Abgasstrom von dem zylindrischen Spalt durch den Umlenkbereich in die zentrale Kammer geleitet wird und die Zugabevorrichtung die Vorläuferlösung durch den Umlenkbereich in einer axialen Richtung in die zentrale Kammer zugibt.

Die gesamte Vorrichtung hat vorzugsweise ein zylindrisches Gehäuse. Dabei ist an einer Stirnfläche des zylindrischen Gehäuses die Zugabevorrichtung angeordnet, wobei die Zugaberichtung zu diesem zylindrischen Gehäuse in axialer Richtung ausgerichtet ist. An der gegenüberliegenden Stirnseite des zylindrischen Gehäuses ist vorzugsweise der Ausströmanschluss angeordnet. Der Einströmanschluss mündet mit einer tangentialen Richtung durch eine Umfangsfläche in das zylindrische Gehäuse ein. Der Reaktionsraum ist innerhalb des zylindrischen Gehäuses der Vorrichtung angeordnet. Ausgehend von der Zugabevorrichtung in Richtung hin zu dem Ausströmanschluss ist dann das Umlenkelement angeordnet, welches den zylindrischen (ringförmigen) Spalt von der zentralen Kammer des Reaktionsraums abtrennt. Der zylindrische Spalt ist vorzugsweise nur in Richtung hin zu der Zugabevorrichtung geöffnet und auf der gegenüberliegenden Seite verschlossen. Das durch den Einströmanschluss eintretende Gas tritt daher in der Nähe der Zugabevorrichtung in einem Umlenkbereich von dem zylindrischen Spalt in die zentrale Kammer über. In dem Umlenkbereich existiert vorzugsweise auch noch eine perforierte Blende, wobei die Gasströmung diese perforierte Blende von dem Weg aus dem zylindrischen Spalt in die zentrale Kammer passiert. Diese perforierte Blende hat vorzugsweise eine große zentrale Öffnung, durch welche die Zugabevorrichtung die Ammoniak-Vorläuferlösung in die zentrale Kammer zugibt. Vorzugsweise erstreckt sich der weiter oben beschriebene Sprühkegel der Zugabevorrichtung durch diese zentrale Öffnung. Um die zentrale Öffnung herum sind vorzugsweise eine Vielzahl kleiner Öffnungen angeordnet, die den Eintritt des Gases in die zentrale Kammer begünstigen. In axialer Richtung und ausgehend von der Zugabevorrichtung hin zu dem Ausströmanschluss ist (hinter dem Umlenkelement) ist die bereits beschriebene Auftreffstruktur angeordnet, die den Querschnitt der Vorrichtung und des Reaktionsraums überspannt und die auch eine elektrische Heizung umfassen kann. In axialer Richtung anschließend zur Auftreffstruktur können sich zusätzliche Katalysatorträgerkörper befinden, die zur Umwandlung der Ammoniak-Vorläuferlösung in Ammoniak beitragen. Dort können auch Sensoren und weitere Komponenten angeordnet sein, mit denen die Erzeugung von Ammoniak in der Vorrichtung unterstützt und/oder überwacht werden kann. Ein Sensor der Vorrichtung kann insbesondere eine Lambda-Sonde umfassen, mit welcher ein Lambda-Wert bestimmt werden kann.

Das außen angeordnete zylindrische Umlenkelement hat den Vorteil, dass eine thermische Isolierung der zentralen Kammer von der Außenwand der Vorrichtung realisiert ist, so dass die in die zentrale Kammer zugegebene Ammoniak-Vorläuferlösung nicht mit der Außenwand der Vorrichtung in Kontakt treten kann. Darüber hinaus findet durch das zylindrische Umlenkelement eine Erwärmung der zentralen Kammer statt, weil das durch den Einströmanschluss einströmende Gas zunächst (durch den zylindrischen Spalt) die zentrale Kammer umströmt und erwärmt, bevor es durch den Umlenkbereich in die zentrale Kammer eintritt.

Weiter wird eine Abgasbehandlungsvorrichtung zur Reinigung der Abgase einer Verbrennungskraftmaschine angegeben, aufweisend eine hier beschriebene Vorrichtung zur Erzeugung von Ammoniak und einen SCR-Katalysator, der in Abgasströmungsrichtung hinter der Vorrichtung angeordnet ist, so dass ein ammoniakhaltiger Gasstrom, der aus dem Ausströmanschluss austritt, durch den SCR-Katalysator strömt, wobei die Einströmöffnung der Vorrichtung über einen Leitungsabzweig an eine Abgasleitung der Verbrennungskraftmaschine angeschlossen ist, wobei durch die Einströmöffnung zwischen 0,1 % und 5,0 % des Abgases aus der Verbrennungskraftmaschine in den Reaktionsraum strömt.

Der SCR-Katalysator der Abgasbehandlungsvorrichtung dient dazu, dass mit dem von der Vorrichtung erzeugten Ammoniak in der Abgasbehandlungsvorrichtung eine Reduktionsreaktion erzeugt werden kann, bei der Stickstoffoxidverbindungen im Abgas unter Zuhilfenahme des Ammoniaks reduziert werden.

Wie bereits erläutert, zweigt der Leitungsabzweig vor einem Turbolader von der Abgasleitung ab, während die Zugabeleitung nach dem Turbolader in die Abgasleitung einmündet. Aus diesem Grund ist es vorteilhaft, wenn nur ein verhältnismäßig kleiner Abgasstrom aus der Hauptabgasleitung abgezweigt wird und durch den Einströmanschluss in die Vorrichtung strömt. Der Hauptabgasstrom kann dann in dem Turbolader verwendet werden, um mechanische Energie zur Aufladung der Verbrennungskraftmaschine zu erzeugen. Darüber hinaus kann ein derart kleiner Abgasteilstrom zwischen 0,1 % und 5 % des Abgases mit Hilfe einer elektrischen Heizung besonders effektiv erwärmt werden, weil hierzu verhältnismäßig wenig thermische Energie notwendig ist. In der Abgasbehandlungsvorrichtung ist vorzugsweise ein SCR-Katalysator angeordnet, an dem Stickstoffoxidverbindungen im Abgas unter Zuhilfenahme des erzeugen Ammoniaks zu unschädlichen Substanzen reduziert werden können.

Eine solche Abgasbehandlungsvorrichtung wird besonders bevorzugt zur Reinigung der Abgase einer Diesel-Verbrennungskraftmaschine verwendet. Die Abgasbehandlungsvorrichtung und die Vorrichtung sind insbesondere auch zur Abgasreinigung in Wasserfahrzeugen, Schienenfahrzeugen, Land- und Baumaschinen usw. geeignet. Besonders geeignet sind die Vorrichtung und die Abgasbehandlungsvorrichtungen in Anwendungen, in denen die Abgase einer Verbrennungskraftmaschine gereinigt werden, die viel im Teillastbereich und im Niedriglastbereich eingesetzt wird, weil dann besonders häufig niedrige Abgastemperaturen auftreten.

In einer besonders vorteilhaften Ausführungsvariante weist die Abgasbehandlungsvorrichtung einen Partikelfilter auf, der in Abgasströmungsrichtung hinter der Vorrichtung angeordnet ist, so dass ein aus dem Ausströmanschluss aus der Vorrichtung austretender Gasstrom durch den Partikelfilter strömt.

Weiter oben wurde bereits beschrieben, dass die Vorrichtung zur Erzeugung von Ammoniak zugleich auch dazu ausgebildet sein kann, Ozon zu erzeugen. Ozon ist besonders effektiv, um kohlenwasserstoffhaltige Ablagerungen (insbesondere Rußablagerungen) in einem Partikelfilter zu entfernen. Durch die Verwendung einer beschriebenen Vorrichtung in einer Abgasbehandlungsvorrichtung, die einen SCR-Katalysator und einen Partikelfilter aufweist, wird es möglich, die Vorrichtung sowohl zur Erzeugung von Ammoniak für den SCR-Katalysator als auch zur Erzeugung von Ozon zur Reinigung des Partikelfilters zu verwenden.

Zudem kann ein Verfahren zum Betrieb einer Abgasbehandlungsvorrichtung zur Reinigung der Abgase einer Verbrennungskraftmaschine mit einer beschriebenen Vorrichtung und mit einem Partikelfilter angegeben werden, das zumindest die folgenden Schritte aufweist:
a) Zugabe von Luft aus einer Ansaugleitung der Verbrennungskraftmaschine in die Vorrichtung durch den Einströmanschluss;
b) Erzeugen von Ozon in der Vorrichtung, so dass ein ozonhaltiger Gasstrom in der Vorrichtung erzeugt wird und an dem Ausströmanschluss aus der Vorrichtung austritt;
c) Zugabe des Ozons zu dem Partikelfilter über eine Zugabeleitung;
d) Regenerieren des Partikelfilters, wobei Rußablagerungen in dem Partikelfilter mit Ozon umgesetzt werden.

Die Zugabe von Luft in die Vorrichtung bzw. in den Reaktionsraum der Vorrichtung kann insbesondere dann zielgerichtet erfolgen, wenn Ozon zur Regenerierung eines Partikelfilters benötigt wird.

Die im Zusammenhang mit der beschriebenen Vorrichtung und der beschriebenen Abgasbehandlungsvorrichtung geschilderten Vorteile und Ausgestaltungsmerkmale sind in analoger Weise auf dieses Verfahren übertragbar. Gleiches gilt für die im Zusammenhang mit dem Verfahren beschriebenen Vorteile und Ausgestaltungsmerkmale, die in analoger Weise auf die vorgeschlagene Vorrichtung und die Abgasbehandlungsvorrichtung übertragbar sind.

Die Erfindung sowie das technische Umfeld der Erfindung werden nachfolgend anhand der Figuren näher erläutert. Es ist darauf hinzuweisen, dass die Figuren und insbesondere die in den Figuren dargestellten Größenverhältnisse nur schematisch sind. Es zeigen:
- Fig. 1:: eine Vorrichtung zur Erzeugung von Ammoniak aus einer Ammoniak-Vorläuferlösung,
- Fig. 2:: einen Querschnitt durch eine solche Vorrichtung zur Erzeugung von Ammoniak, und
- Fig. 3:: ein Kraftfahrzeug, aufweisend eine Vorrichtung zur Erzeugung von Ammoniak.

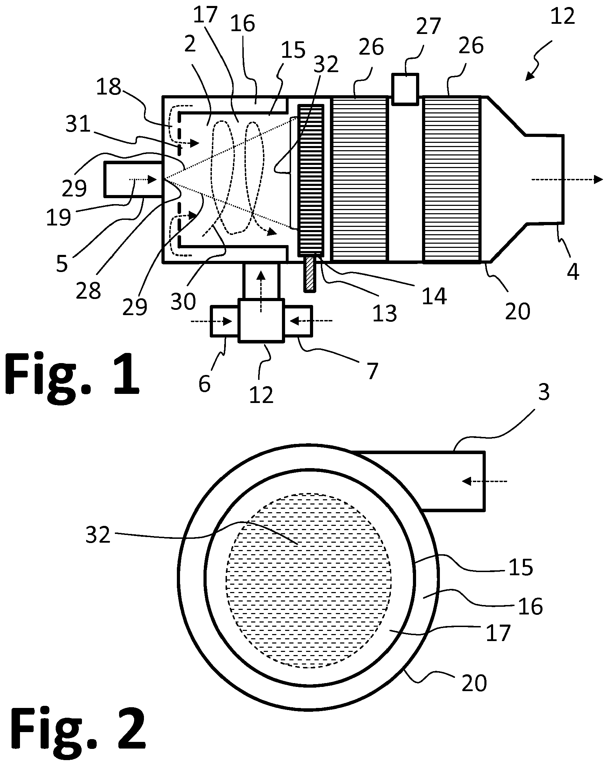

In Fig. 1 zeigt eine Vorrichtung 1, die ein zylindrisches Gehäuse 20 aufweist. An einer Stirnseite der Vorrichtung 1 ist eine Zugabevorrichtung 5 angeordnet, mit welcher eine Ammoniak-Vorläuferlösung (z. B. eine Harnstoff-Wasser-Lösung) zu einem Reaktionsraum 2 der Vorrichtung 1 zugegeben werden kann. An der gegenüberliegenden Stirnseite der Vorrichtung 1 befindet sich ein Ausströmanschluss 4, an welchem ein ammoniakhaltiger Gasstrom aus der Vorrichtung 1 ausströmen kann. An der Umfangsfläche der Vorrichtung 1 ist mit einer tangentialen Ausrichtung ein Einströmanschluss 3 angeordnet, über welchen ein Gasstrom in den Reaktionsraum 2 der Vorrichtung 1 einströmen kann. Der Einströmanschluss 3 ist mit einer ersten Verbindungsleitung 6 verbunden, über die ein aus einer Abgasleitung abgezweigter Abgasstrom in die Vorrichtung 1 zugeführt werden kann. Der Einströmanschluss 3 ist darüber hinaus mit einer zweiten Verbindungsleitung 7 verbunden, über die ein Luftstrom in die Vorrichtung 1 einströmen kann, der beispielsweise aus einer Ansaugleitung einer Verbrennungskraftmaschine abgezweigt werden kann. In dem (einzelnen) Reaktionsraum 2 der Vorrichtung 1 ist ein Umlenkelement 15 vorgesehen, welches einen zylindrischen Spalt 16 von einer zentralen Kammer 17 in den Reaktionsraum 2 abtrennt. Der durch den Einströmanschluss 3 eintretende Gasstrom tritt zunächst in den zylindrischen Spalt 16 ein und wird anschließend in einem Umlenkbereich 18 in die zentrale Kammer 17 umgelenkt.

Die Zugabevorrichtung 5 umfasst vorzugsweise eine Düse 28, welche die Ammoniak-Vorläuferlösung mit einem auf einen innerhalb des Reaktionsraums 2 angeordneten Auftreffbereich 32 mit einem Sprühkegel 29 sprüht. In dem Umlenkbereich 18 ist auch eine perforierte Blende 31 vorgesehen, durch welche sich der Sprühkegel 29 der Zugabevorrichtung 5 hindurch erstreckt. Dazu weist die perforierte Blende 31 eine zentrale Öffnung auf. Darüber hinaus weist die perforierte Blende 31 eine Vielzahl von kleineren (um die zentrale Öffnung herum angeordneten) Öffnungen auf, durch die der Abgasstrom aus dem zylindrischen Spalt 16 in die zentrale Kammer 17 übertreten kann. Durch die tangentiale Anordnung der Einströmanschlusses 3 an den Reaktionsraum 2 bzw. an der Vorrichtung 1 wird innerhalb des Reaktionsraums 2 eine Wirbelströmung 30 des Gasstroms erzeugt.

Ein Auftreffbereich 32 für die mit der Zugabevorrichtung 5 zugeführte Ammoniak-Vorläuferlösung ist an einer als elektrisch beheizbarer Wabenkörper 14 ausgeführten elektrischen Heizung 13 angeordnet, die in Abgasströmungsrichtung und in der axialen Richtung 19 ausgehend von dem Einströmanschluss 3 und der Zugabevorrichtung 5 hinter der Zugabevorrichtung 5 liegt. Hinter der elektrischen Heizung 13 können in Abgasströmungsrichtung in der Vorrichtung 1 noch weitere Komponenten vorgesehen sein (wie beispielsweise ein Katalysatorträgerkörper 26 oder ein Sensor 27), mit welchen die Reaktionen innerhalb der Vorrichtung 1 überwacht bzw. kontrolliert beeinflusst werden können.

Fig. 2 zeigt einen Querschnitt durch die Vorrichtung aus Fig. 1, bei welchem der tangential angeordnete Einströmanschluss 3 das Umlenkelement 15, der zylindrische Spalt 16 und die zentrale Kammer 17 sowie der Auftreffbereich 32 und das Gehäuse 20 erkennbar sind.

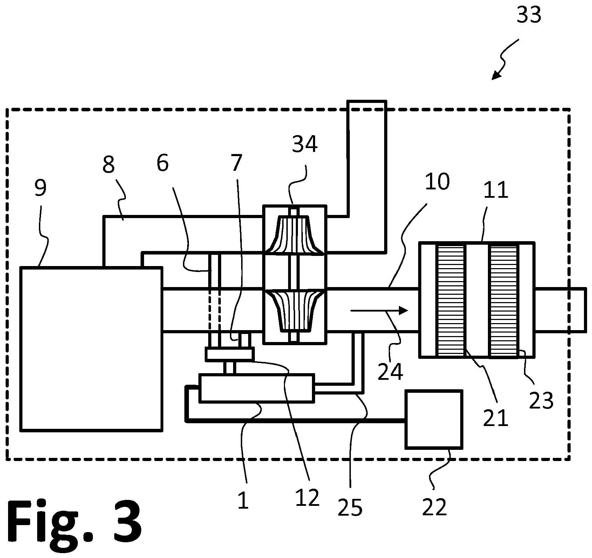

Fig. 3 zeigt ein Kraftfahrzeug 33, aufweisend eine Verbrennungskraftmaschine 9 und eine Abgasbehandlungsvorrichtung 11, die zur Reinigung der Abgase der Verbrennungskraftmaschine 9 ausgebildet ist. Die Abgasbehandlungsvorrichtung 11 ist über eine Abgasleitung 10 mit der Verbrennungskraftmaschine 9 verbunden. Die Verbrennungskraftmaschine 9 weist darüber hinaus eine Ansaugleitung 8 auf, über welche die Verbrennungskraftmaschine Luft (aus der Umgebung) ansaugt. Die über die Ansaugleitung 8 zu der Verbrennungskraftmaschine 9 gelangende Luft wird von einem Turbolader 34 aufgeladen bzw. verdichtet, wobei der Turbolader 34 durch den Abgasstrom in der Abgasleitung 10 angetrieben wird. In der Abgasbehandlungsvorrichtung 11 ist ein SCR-Katalysator 21 zur Durchführung einer selektiven katalytischen Reduktion und ein Partikelfilter 23 zur Filterung von Partikeln im Abgasstrom angeordnet. Das Kraftfahrzeug 33 weist auch eine Vorrichtung 1 auf, mit der ein ammoniakhaltiger Gasstrom erzeugt werden kann. Die Vorrichtung 1 ist vorzugsweise auch dazu geeignet, Ozon zu erzeugen, mit welchem im Partikelfilter 23 abgelagerte Partikel reduziert werden können. Die Vorrichtung 1 wird über eine erste Verbindungsleitung 6 mit Luft aus der Ansaugleitung 8 versorgt. Die Vorrichtung 1 wird darüber hinaus über eine zweite Verbindungsleitung 7 mit Abgas aus der Abgasleitung 10 versorgt. Die Vorrichtung 1 hat ein Ventil 12, mit welchem das Abgas aus der zweiten Verbindungsleitung 7 und die Luft aus der ersten Verbindungsleitung 6 zielgerichtet gemischt und der Vorrichtung 1 zugeführt werden können. Die Vorrichtung 1 wird darüber hinaus mit Ammoniak-Vorläuferlösung aus einem Vorläuferlösungstank 22 versorgt.

Die beschriebene Vorrichtung ist besonders vorteilhaft, weil sie einerseits ermöglicht, Ammoniak zur Durchführung des SCR-Verfahrens in einem SCR-Katalysator effektiv bereitzustellen. Gleichzeitig ermöglicht die Vorrichtung es, auch Ozon bereitzustellen, mit dem Verrußungen in einem Partikelfilter wirkungsvoll verbrannt werden können.

### Bezugszeichenliste

- 1: Vorrichtung
- 2: Reaktionsraum
- 3: Einströmanschluss
- 4: Ausströmanschluss
- 5: Zugabevorrichtung
- 6: erste Verbindungsleitung
- 7: zweite Verbindungsleitung
- 8: Ansaugleitung
- 9: Verbrennungskraftmaschine
- 10: Abgasleitung
- 11: Abgasbehandlungsvorrichtung
- 12: Ventil
- 13: elektrische Heizung
- 14: elektrisch beheizbarer Wabenkörper
- 15: Umlenkelement
- 16: zylindrischer Spalt
- 17: zentrale Kammer
- 18: Umlenkbereich
- 19: axiale Richtung
- 20: Gehäuse
- 21: SCR-Katalysator
- 22: Vorläuferlösungstank
- 23: Partikelfilter
- 24: Abgasströmungsrichtung
- 25: Zugabeleitung
- 26: Katalysatorträgerkörper
- 27: Sensor
- 28: Düse
- 29: Sprühkegel
- 30: Wirbelströmung
- 31: perforierte Blende
- 32: Auftreffbereich
- 33: Kraftfahrzeug
- 34: Turbolader

## Patentansprüche

1. Vorrichtung (1) zur Erzeugung von Ammoniak aus einer Ammoniak-Vorläuferlösung, aufweisend einen Reaktionsraum (2) mit einem Einströmanschluss (3), durch welchen ein Gasstrom in den Reaktionsraum (2) einströmen kann, und mit einem Ausströmanschluss (4), durch welchen ein ammoniakhaltiger Gasstrom den Reaktionsraum verlassen kann, sowie mit einer Zugabevorrichtung (5), mit welcher dem Reaktionsraum (2) eine Ammoniak-Vorläuferlösung zugegeben werden kann, wobei der Einströmanschluss (3) mit einer ersten Verbindungsleitung (6) verbunden ist, durch die Luft aus einer Ansaugleitung (8) einer Verbrennungskraftmaschine (9) in den Reaktionsraum (2) einströmen kann, und wobei der Einströmanschluss (3) darüber hinaus mit einer zweiten Verbindungsleitung (7) angeschlossen ist, durch die Abgas vor dem Turbolader (34) aus einer Abgasleitung (10) der Verbrennungskraftmaschine (9) in den Reaktionsraum (2) einströmen kann, wobei der Ausströmanschluss (4) über eine Zugabeleitung (25) hinter dem Turbolader (34) in die Abgasleitung (10) mündet, **dadurch gekennzeichnet, dass** der Ausströmanschluss (4) über die Zugabeleitung (25) aber vor einem Partikelfilter (23) in die Abgasleitung (10) mündet und dass in dem Reaktionsraum (2) eine elektrische Heizung (13) angeordnet ist.

2. Vorrichtung (1) nach Patentanspruch 1, wobei zwischen der ersten Verbindungsleitung (6) und der zweiten Verbindungsleitung (7) ein Ventil (12) angeordnet ist, mit dem dem Reaktionsraum (2) wahlweise Abgas oder Luft zugeführt werden kann.

3. Vorrichtung (1) nach Patentanspruch 2, wobei mit dem Ventil (12) ein Gemisch aus Luft und Abgas erzeugt werden kann, das dem Reaktionsraum (2) zugeführt werden kann.

4. Vorrichtung (1) nach Patentanspruch 3, wobei die elektrische Heizung (13) ein elektrisch beheizbarer Wabenkörper (14) ist.

5. Vorrichtung (1) nach einem der vorhergehenden Patentansprüche, wobei der Einströmanschluss (3) tangential an dem Reaktionsraum (2) angeordnet ist.

6. Vorrichtung (1) nach einem der vorhergehenden Patentansprüche, wobei der Reaktionsraum (2) durch ein zylindrisches Umlenkelement (15) in einen zylindrischen Spalt (16) und eine zentrale Kammer (17) unterteilt ist, wobei der zylindrische Spalt (16) und die zentrale Kammer (17) über einen Umlenkbereich (18) miteinander verbunden sind, wobei der Einströmanschluss (3) an dem zylindrischen Spalt (16) angeordnet ist, der Abgasstrom von dem zylindrischen Spalt (16) durch den Umlenkbereich (18) in die zentrale Kammer (17) geleitet wird und die Zugabevorrichtung (5) die Vorläuferlösung durch den Umlenkbereich (18) in einer axialen Richtung (19) in die zentrale Kammer (17) zugibt.

7. Abgasbehandlungsvorrichtung (11) zur Reinigung der Abgase einer Verbrennungskraftmaschine (9), aufweisend eine Vorrichtung (1) zur Erzeugung von Ammoniak nach einem der vorhergehenden Patentansprüche und einen SCR-Katalysator (21), der in Abgasströmungsrichtung (24) hinter der Vorrichtung (1) angeordnet ist, so dass ein ammoniakhaltiger Gasstrom, der aus dem Ausströmanschluss (4) austritt durch den SCR-Katalysator strömt, wobei der Einströmanschluss (3) der Vorrichtung über einen Leitungsabzweig (22) an eine Abgasleitung (10) der Verbrennungskraftmaschine (9) angeschlossen ist, wobei durch den Einströmanschluss (3) zwischen 0,1 % und 5 % des Abgases aus der Verbrennungskraftmaschine (9) in den Reaktionsraum (2) strömt.

## Claims

1. Device (1) for generating ammonia from an ammonia precursor solution, having a reaction space (2) with an inflow connector (3) through which a gas flow can flow into the reaction space (2), with an outflow connector (4) through which an ammonia-containing gas flow can exit the reaction space, and with a metering device (5) by way of which an ammonia precursor solution can be metered into the reaction space (2), wherein the inflow connector (3) is connected to a first connecting line (6) through which air can flow from an intake line (8) of an internal combustion engine (9) into the reaction space (2), and wherein the inflow connector (3) is furthermore connected to a second connecting line (7) through which exhaust gas upstream of the turbocharger (34) can flow from an exhaust line (10) of the internal combustion engine (9) into the reaction space (2), wherein the outflow connector (4) opens into the exhaust line (10) via a metering line (25) downstream of the turbo-charger (34), **characterized in that** the outflow connector (4) opens into the exhaust line (10) via the metering line (25) but upstream of a particle filter (23) and **in that** an electric heater (13) is arranged in the reaction space (2).

2. Device (1) according to Patent Claim 1, wherein, between the first connecting line (6) and the second connecting line (7), there is arranged a valve (12) by way of which selectively exhaust gas or air can be supplied to the reaction space (2).

3. Device (1) according to Patent Claim 2, wherein, by way of the valve (12), a mixture of air and exhaust gas can be generated which can be supplied to the reaction space (2).

4. Device (1) according to Patent Claim 3, wherein the electric heater (13) is an electrically heatable honeycomb body (14).

5. Device (1) according to one of the preceding pa-tent claims, wherein the inflow connector (3) is arranged tangentially at the reaction space (2).

6. Device (1) according to one of the preceding pa-tent claims, wherein the reaction space (2) is divided by a cylindrical diverting element (15) into a cylindrical gap (16) and a central chamber (17), wherein the cylindrical gap (16) and the central chamber (17) are connected to one another by way of a diverting region (18), wherein the inflow connector (3) is arranged at the cylindrical gap (16), the exhaust-gas flow from the cylindrical gap (16) is conducted into the central chamber (17) through the diverting region (18), and the metering device (5) meters the precursor solution in an axial direction (19) into the central chamber (17) through the diverting region (18).

7. Exhaust-gas treatment device (11) for the purification of the exhaust gases of an internal combustion engine (9), having a device (1) for generating ammonia according to one of the preceding pa-tent claims, and having an SCR catalytic converter (21) which is arranged downstream of the device (1) as viewed in the exhaust-gas flow direction (24), such that an ammonia-containing gas flow which emerges from the outflow connector (4) flows through the SCR catalytic converter, wherein the inflow connector (3) is connected by way of a line branch (22) to an exhaust line (10) of the internal combustion engine (9), wherein, through the inflow connector (3), between 0.1% and 5% of the exhaust gas from the internal combustion engine (9) flows into the r

## Revendications

1. Dispositif (1) de production d'ammoniac à partir d'une solution de précurseur d'ammoniac, présentant une chambre de réaction (2) avec un raccord d'amission (3), par lequel un courant de gaz peut pénétrer dans la chambre de réaction (2), et avec un raccord d'échappement (4), par lequel un courant de gaz contenant de l'ammoniac peut quitter la chambre de réaction (2), ainsi qu'avec un dispositif d'addition (5), avec lequel une solution de précurseur d'ammoniac peut être ajoutée à la chambre de réaction (2), dans lequel le raccord d'admission (3) est connecté à une première conduite de raccordement (6) par laquelle de l'air provenant d'un conduit d'aspiration (8) d'un moteur à combustion interne (9) peut pénétrer dans la chambre de réaction (2), et dans lequel le raccord d'admission (3) est en outre connecté à une deuxième conduite de raccordement (7), par laquelle des gaz d'échappement prélevés avant le turbocompresseur (34) hors d'une conduite de gaz d'échappement (10) du moteur à combustion interne (9) peuvent pénétrer dans la chambre de réaction (2), dans lequel le raccord d'échappement (4) débouche par une conduite d'addition (25) après le turbocompresseur (34) dans la conduite de gaz d'échappement (10), **caractérisé en ce que** le raccord d'échappement (4) débouche par la conduite d'addition (25) mais avant le filtre à particules (23) dans la chambre de réaction (2) et **en ce qu'**un chauffage électrique (13) est disposé dans la chambre de réaction (2).

2. Dispositif (1) selon la revendication 1, dans lequel une vanne (12) est disposée entre la première conduite de raccordement (6) et la deuxième conduite de raccordement (7), avec laquelle du gaz d'échappement ou de l'air peut être envoyé de façon sélective à la chambre de réaction (2).

3. Dispositif (1) selon la revendication 2, dans laquelle on peut produire avec la vanne (12) un mélange d'air et de gaz d'échappement, qui peut être envoyé à la chambre de réaction (2).

4. Dispositif (1) selon la revendication 3, dans lequel le chauffage électrique (13) est un corps en nid d'abeilles (14) pouvant être chauffé électriquement.

5. Dispositif (1) selon l'une quelconque des revendications précédentes, dans lequel le raccord d'admission (3) est disposé tangentiellement à la chambre de réaction (2).

6. Dispositif (1) selon l'une quelconque des revendications précédentes, dans lequel la chambre de réaction (2) est divisée par un élément de déviation cylindrique (15) en une fente cylindrique (16) et une chambre centrale (17), dans lequel la fente cylindrique (16) et la chambre centrale (17) sont reliées l'une à l'autre par une zone de déviation (18), dans lequel le raccord d'admission (3) est disposé à la fente cylindrique (16), le courant de gaz d'échappement est conduit de la fente cylindrique (16) par la zone de déviation (18) dans la chambre centrale (17) et le dispositif d'addition (5) ajoute la solution de précurseur d'ammoniac par la zone de déviation (18) dans une direction axiale (19) dans la chambre centrale (17).

7. Dispositif de post-traitement de gaz d'échappement (11) pour l'épuration des gaz d'échappement d'un moteur à combustion interne (9), présentant un dispositif (1) de production d'ammoniac selon l'une quelconque des revendications précédentes et un catalyseur SCR (21), qui est disposé après le dispositif (1) dans la direction d'écoulement des gaz d'échappement (24), de telle manière qu'un courant de gaz contenant de l'ammoniac, qui sort du raccord d'échappement (4), s'écoule à travers le catalyseur SCR, dans lequel le raccord d'admission (3) du dispositif est raccordé par une conduite de dérivation (22) à une conduite de gaz d'échappement (10) du moteur à combustion interne (9), dans lequel entre 0,1 % et 5 % des gaz d'échappement provenant du moteur à combustion interne (9) s'écoulent par le raccord d'admission (3) dans la chambre de réaction (2).
